(19) **Europäisches Patentamt European Patent Office Office européen des brevets**

(11) **EP 1 619 107 B1**

(12) **EUROPÄISCHE PATENTSCHRIFT**

(45) Veröffentlichungstag und Bekanntmachung des Hinweises auf die Patenterteilung:
**15.07.2009 Patentblatt 2009/29**

(51) Int Cl.:
***B62D 23/00*** *(2006.01)* ***B62D 21/18*** *(2006.01)*
***B62D 27/02*** *(2006.01)*

(21) Anmeldenummer: **05007500.1**

(22) Anmeldetag: **06.04.2005**

(54) **Rahmenstruktur für Aufbauten von Kraftfahrzeugen**

Frame structure for vehicle chassis

Structure de chassis de véhicule

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.07.2004 DE 102004036071**

(43) Veröffentlichungstag der Anmeldung:
**25.01.2006 Patentblatt 2006/04**

(73) Patentinhaber: **Dr. Ing. h.c. F. Porsche Aktiengesellschaft 70435 Stuttgart (DE)**

(72) Erfinder: **Vlahovic, Josip 71691 Freiberg am Neckar (DE)**

(56) Entgegenhaltungen:
**DE-A1- 10 139 268 DE-A1- 19 935 654**
**DE-A1- 19 946 558**

**Beschreibung**

Die Erfindung bezieht sich auf eine Rahmenstruktur für Aufbauten von Kraftfahrzeugen nach dem Oberbegriff des Patentanspruchs 1.

Es ist eine Rahmenstruktur der eingangs genannten Gattung bekannt, EP 0 631 924 A1, bei der zwei stranggepresste Träger T-förmig zusammengesetzt sind. Diese Träger sind als Hohlkörper ausgebildet. An einem der beiden Träger ist eine Art Knoten angeformt, dessen freies Ende mit Aufnahmen für den anderen Träger versehen ist. Dieser Träger übergreift das freie Ende des Knoten.

In der DE 195 19 779 A1 wird ein Rahmenseitenteil einer Personenkraftwagen Karosserie behandelt, das zwei von Trägerelementen begrenzte Öffnungen für Türen umfasst. Zwischen einem oberen Längsträger und einem unteren Längsträger verläuft eine mittlere Säule, die unter Vermittlung von Knoten mit besagten Längsträgern verbunden ist.

Der DE 101 39 268 A1 ist eine Rahmenstruktur für Aufbauten von Kraftfahrzeugen zu entnehmen, die T-förmig zusammengesetzte erste und zweite Träger umfasst, wobei zwischen den aus Metall hergestellten Trägern ein Knoten vorgesehen ist.
Beide Träger werden durch Rohre mit ovalem Querschnitt gebildet. Am zweiten Träger ist der an den ersten Träger anschließende als Querschnittserweiterung ausgebildete Knoten vorgesehen, der von der äußersten Begrenzung des ersten Trägers aus - in Längsrichtung des zweiten Trägers gesehen - eine definierte Knotenlänge besitzt. Bei dieser Rahmenstruktur ist innerhalb des zweiten Trägers ein profilierter innenliegender Steg vorgesehen. Über die Knotenlänge ist in dieser Schrift nichts ausgesagt.

Aufgabe der Erfindung ist es, eine Rahmenstruktur für Aufbauten von Kraftfahrzeugen zu schaffen, bei der T-förmig angeordnete Träger und ein letztere verbindender Knoten derart ausgebildet sind, dass die Rahmenstruktur bezüglich Gewicht und Steifigkeit optimiert ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass Gewicht und Steifigkeit der Rahmenstruktur aufgrund der elliptischen Querschnitte der ersten und zweiten Träger und der konstruktiven Festlegungen des Knotens gegenüber ähnlich konzipierten Rahmenstrukturen günstigere Werte aufweisen. Dabei ist die Knotenlänge ein bedeutendes Merkmal, das sich auf einfache Weise durch die beanspruchte Beziehung

$$L = (1,50 \, bis \, 1,70) x \overline{AC}$$

definieren lässt. Sinngemäß gilt dies auch für das Maß AC, das durch die Beziehung festlegbar ist:

$$\overline{AC} = \frac{B\%}{2}$$

Die seitliche Begrenzung des Knotens verläuft als konkave stetige Knotenlinie, was zur Spannungsreduktion beiträgt. Dies wird auch noch dadurch unterstützt, dass die Knotenlinie einerseits tangential in den zweiten Träger einmündet und andrerseits einen spitzen Winkel mit der Begrenzung des größten Durchmessers des ersten Trägers einschließt. Schließlich ist es von Vorteil, wenn die Querschnittserweiterung durch einen Innenhochdruck Verformungsvorgang hergestellt wird und wenn die Querschnittserweiterung bzw. der Knoten aus einem Stück mit dem zweiten Träger besteht.

In der Zeichnung wird ein Ausführungsbeispiel der Erfindung gezeigt, das nachstehen erläutert wird.

Es zeigen

Fig. 1    eine schematische Schrägansicht einer Rahmenstruktur nach der Erfindung,

Fig. 2    verschiedene Rahmenstrukturen für einen Gewichtsvergleich.

Eine Rahmenstruktur 1 ist zum Einsatz in einen Aufbau eines Kraftfahrzeug bestimmt - beide letztere sind nicht dargestellt -, und zwar in der Bodenanlage, Seitenwand oder dgl. des besagten Aufbaus, welche Rahmenstruktur 1 zwei T-förmig zusammengesetzte Träger nämlich einen ersten Träger 2 und einen zweiten Träger 3 umfasst. Beide Träger 2 und 3 sind unter Zwischenschaltung eines Knotens 4 miteinander verbunden und werden durch mittels Strangpressen hergestellter Rohre aus Metall - Stahl, Leichtmetall oder dgl. - gebildet. Darüber hinaus weisen besagte Rohre einen elliptischen Querschnitt mit Hauptachsen Hal und Hall und Nebenachsen Nal und Nall auf, wobei die größten Durchmesser mit Dmgl und Dmgll und kleinsten Durchmesser mit Dmkl und DmkII bezeichnet sind. Die Nebenachsen Nal und NaII - ebenso die Hauptachsen Hal und Hall des ersten und des zweiten Träger 2 und 3 besitzen jeweils einen gleichgerichteten Verlauf, anders ausgedrückt sie verlaufen parallel zueinander.

Der Knoten 4 ist als eine durch einen Innenhochdruck Verformungsvorgang hergestellte Querschnittserweiterung 5 des zweiten Trägers 3 ausgeführt, und sie ist aus einem Stück mit dem zweiten Träger 3 hergestellt. Dabei ist der Knoten 4 symmetrisch zu einer Mittellängsebene MII des zweiten Trägers 3 gestaltet, die senkrecht zu einer Mittellängsebene MI des ersten Trägers 2 verläuft; es besteht jedoch auch die Möglichkeit die Mittellängsebenen MII und MI im Winkel bspw. 45° bis 90° zueinander anzuordnen. Eine Knotenlänge L des Knotens 4, die an einer äußeren dem zweiten Träger 3 zugewandten Begrenzung Bae des ersten Trägers 2 beginnt und parallel zur Mittellängsebene MII des zweiten Trägers 3 verläuft, wird durch folgende Beziehung bestimmt:

$$L = (1{,}50 \, bis \, 1{,}70) \, x \, \overline{AC}$$

Als eine optimierter Wert dieser Beziehung hat sich nachstehendes ergeben:

$$L = 1{,}61 \, x \, \overline{AC}$$

In diesem Zusammenhang ist AC das Maß vom äußeren Beginn -A- des Knotens 4 bis zur Begrenzung -C- des größten Durchmessers DMgll des zweiten Trägers 3.
Zur Bestimmung des Maßes AC ist die unten angegebene Beziehung geeignet:

$$\overline{AC} = \frac{B\% - B}{2}$$

Bei dieser Beziehung entsprechen B% dem größten Aufweitungsmaß und B dem größten Durchmesser Dmgll des zweiten Trägers 3.
Eine seitliche Begrenzung Bs des Knotens 4 ist als konkave stetige Knotenlinie 6 ausgebildet, die einerseits tangential in den zweiten Träger 3 einmündet und andererseits einen spitzen Winkel $\alpha$ zu einer Begrenzung BDmgl des ersten Träges 2 einschließt; dieser Winkel a beträgt vorzugsweise zwischen 30° und 42°. Außerdem ist der Knoten 4 des zweiten Trägers 3 mit einer dem ersten Träger 2 zugekehrten Verbindungskurve 7 versehen, die den ersten Träger 2 bereichsweise überlappt. Entlang der Verbindungskurve 7 ist der Knoten 4 durch Schweißen, Kleben oder dgl. mit dem ersten Träger 2 verbunden.

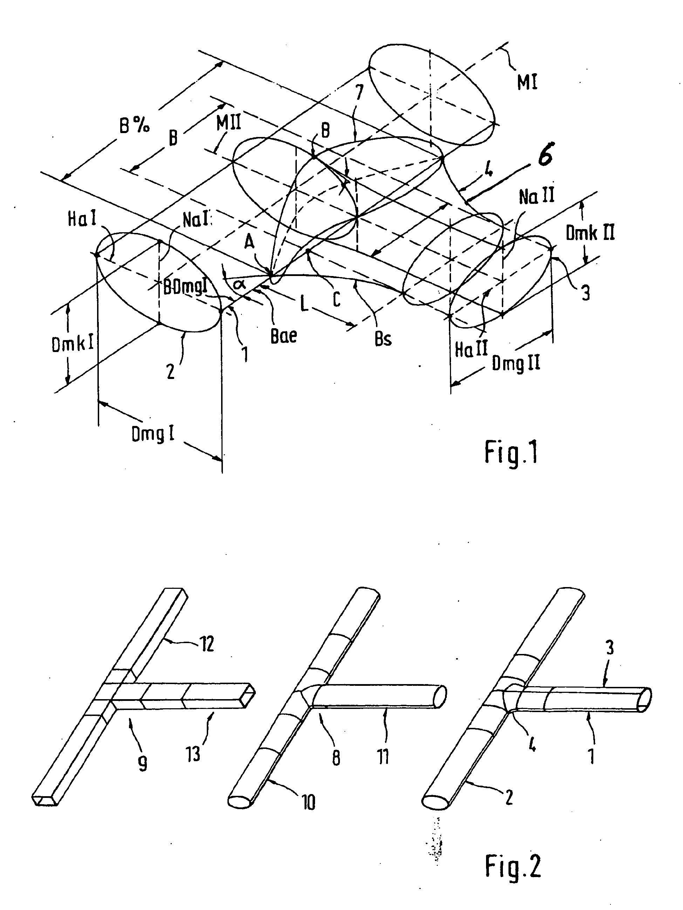

In Fig. 2 sind neben der durch den ersten Träger 2 und den zweiten Träger 3 dargestellten und den Knoten 4 umfassenden Rahmenstruktur 1 noch weitere Rahmenstrukturen 8 und 9 dargestellt. Die Rahmenstruktur 8 wird durch einen ersten Träger 10 und einen zweiten Träger 11 gebildet; die Rahmenstruktur 9 durch einen ersten Träger 12 und einen zweiten Träger 13. Die zweiten Träger 11 und 13 der Rahmenstruktur 8 bzw. 9 sind knotenfrei an den jeweiligen ersten Träger 10 bzw. 12 herangeführt. Bei etwa gleicher Dimensionierung der Träger der Rahmenstrukturen 1, 8 und 9 weist die Vierkantrohre umfassend Rahmenstruktur 9 ein um 36% höheres Gewicht als die elliptische Rohre besitzende Rahmenstruktur 8 und die Rahmenstruktur 8 wiederum ein um 13% höheres Gewicht als die Rahmenstruktur 1 auf, wobei die Steifigkeit der Rahmenstruktur 1 dank der besonderen Gestaltung höher ist als die der Rahmenstrukturen 8 und 9.

**Patentansprüche**

1.  Rahmenstruktur (1) für Aufbauten von Kraftfahrzeugen, die T-förmig zusammengesetzte erste und zweite Träger (2, 3) umfasst, wobei zwischen den aus Metall hergestellten Trägern (2, 3) ein Knoten (4) vorgesehen ist, und der erste Träger (2) und der zweite Träger (3) der Rahmenstruktur (1) durch Rohre mit elliptischen Querschnitten versehen gebildet sind, deren Nebenachsen (NaI und NaII) einen gleich gerichteten Verlauf aufweisen, wobei am zweiten Träger (3) der an den ersten Träger (2) anschließende als Querschnittserweiterung ausgebildete Knoten (4) vorgesehen ist, der von der äußersten Begrenzung (Bae) des ersten Trägers (8) aus -in Längsrichtung des zweiten Trägers (3) gesehen- eine definierte Knotenlänge (L) besitzt, **dadurch gekennzeichnet, dass** die Knotenlänge (L) durch die Beziehung

$$L = (1{,}50 \text{ bis } 1{,}70) \text{ x } AC$$

bestimmt wird, wobei (AC) das Maß vom äußeren Beginn des Knotens (4) bis zur Begrenzung (C) des größten Durchmesser (Dmgll) des zweiten Trägers (3) ist und das Maß (AC) durch die Beziehung

$$AC = \frac{B\% - B}{2}$$

bestimmt wird, und B% das größte Aufweitungsmaß des Knotens (4) ist und (B) dem größten Durchmesser (DmgII) des zweiten Trägers (3) entspricht, wobei von oben auf die Trägerstruktur (1) gesehen eine seitliche Begrenzung (Bs) des Knotens (4) als konkave stetige Knotenlinie (6) verläuft, die einerseits tangential in den zweiten Träger (3) einmündet und andererseits einen spitzen Winkel ($\alpha$) zwischen 30°

bis 42° zur äußeren Begrenzung (Bae) des größten Durchmessers (DmgI) des ersten Trägers (2) einschließt.

**Claims**

1. Frame structure (1) for motor vehicle bodies which comprises first and second supports (2, 3) assembled in T-shape fashion, a node (4) being provided between the supports (2, 3), which are produced from metal, and the first support (2) and the second support (3) of the frame structure (1) being formed by tubes provided with elliptical cross-sections whose minor axes (NaI and NaII) have an identically directed course, the node (4) adjoining the first support (2) and designed as a cross-sectional expansion being provided on the second support (3) and having a defined node length (L) starting from the outermost boundary (Bae) of the first support (8) - seen in the longitudinal direction of the second support (3) - **characterized in that** the node length (L) is determined by the relationship

$$L = (1.50 \text{ to } 1.70) \times AC,$$

(AC) being the dimension from the outer beginning of the node (4) up to the boundary (C) of the largest diameter (DmgII) of the second support (3), and the dimension (AC) being determined by the relationship

$$AC = \frac{B\% - B}{2},$$

and B% being the largest expansion dimension of the node (4) and (B) corresponding to the largest diameter (DmgII) of the second support (3), a lateral boundary (Bs) of the node (4) running, when viewed from above onto the support structure (1), as a concave continuous node line (6) which, on the one hand, merges tangentially into the second support (3) and, on the other hand, encloses an acute angle ($\alpha$) of from 30° to 42° to the outer boundary (Bae) of the largest diameter (DmgI) of the first support (2).

**Revendications**

1. Structure de châssis (1) pour carrosseries de véhicules automobiles, qui comprend des premier et deuxième supports (2, 3) assemblés en forme de T, un noeud (4) étant prévu entre les supports (2, 3) fabriqués en métal, et le premier support (2) et le deuxième support (3) de la structure de cadre (1) étant formés par des tubes pourvus de sections transversales elliptiques, dont les axes auxiliaires (NaI et NaII) présentent une étendue de même orientation, le noeud (4) réalisé sous forme d'élargissement de section transversale se raccordant au premier support (2) étant prévu sur le deuxième support (3), et possédant, depuis la limite la plus extérieure (Bae) du premier support (2) - vu dans la direction longitudinale du deuxième support (3), une longueur de noeud constante (L), **caractérisée en ce que** la longueur du noeud (L) est déterminée par la relation:

$$L = (1,50 \text{ à } 1,70) \times AC,$$

avec (AC) représentant la mesure du début extérieur du noeud (4) jusqu'à la limite (C) du plus grand diamètre (DmgII) du deuxième support (3), et la mesure (AC) étant définie par la relation

$$AC = (B\% - B) / 2,$$

et B% correspondant à la dimension d'élargissement maximal du noeud (4) et (B) correspondant au plus grand diamètre (DmgII) du deuxième support (3), une limitation latérale (Bs) du noeud (4) s'étendant, vu depuis le dessus sur la structure de support (1), sous forme de ligne de noeud constante (6) concave, qui débouche d'une part tangentiellement dans le deuxième support (3) et d'autre part forme un angle aigu ($\alpha$) entre 30° et 42° par rapport à la limite extérieure (Bae) du plus grand diamètre (DmgI) du premier support (2).

Fig.1

Fig.2

5

**IN DER BESCHREIBUNG AUFGEFÜHRTE DOKUMENTE**

**In der Beschreibung aufgeführte Patentdokumente**

- EP 0631924 A1
- DE 19519779 A1
- DE 10139268 A1